## Europäisches Patentamt
## European Patent Office
## Office européen des brevets

(19)

(11) Veröffentlichungsnummer: **0 179 478**
**B1**

(12) **EUROPÄISCHE PATENTSCHRIFT**

(45) Veröffentlichungstag der Patentschrift: 01.08.90

(21) Anmeldenummer: 85113538.4

(22) Anmeldetag: 24.10.85

(51) Int. Cl.⁵: **F 25 B 37/00,** B 01 D 53/14, B 01 D 53/18, B 01 F 5/20, B 01 J 19/26

(54) **Verfahren und Vorrichtung zur Durchführung von Sorptionswärmevorgängen zwischen Gasen und Flüssigkeiten.**

(30) Priorität: 24.10.84 IL 73301

(43) Veröffentlichungstag der Anmeldung:
30.04.86 Patentblatt 86/18

(45) Bekanntmachung des Hinweises auf die Patenterteilung:
01.08.90 Patentblatt 90/31

(84) Benannte Vertragsstaaten:
AT CH DE FR GB IT LI NL

(56) Entgegenhaltungen:
EP-A-0 139 945
DE-A-2 427 693
FR-A- 671 297
FR-A- 775 211
FR-A-1 217 610

(73) Patentinhaber: Stephan, Karl, Prof. Dr.
Walter-Flex-Strasse 40B
D-7000 Stuttgart 75 (DE)

(72) Erfinder: Stephan, Karl, Prof. Dr.
Walter-Flex-Strasse 40 B
D-7000 Stuttgart 75 (DE)
Erfinder: Tamir, Abraham, Prof. Dr.
56 Eshel Street
Omer (IL)
Erfinder: Elperin, Isaak, Prof. Dr.
36/61 Yerushalaim
Beer Sheva (IL)

(74) Vertreter: Steinmann, Otto C. et al
Kanzlei Münich, Steinmann, Schiller
Willibaldstrasse 36
D-8000 München 21 (DE)

Courier Press, Leamington Spa, England.

**Beschreibung**

Die Erfindung bezieht sich auf ein Verfahren und eine Vorrichtung zur Durchführung von Sorptionswärmevorgängen, bei dem eine gasförmige Phase in einer an der zu absorbierenden phase armen flüssigen Phase absorbiert und die entstehende Wärme über einen Wärmetauscher abgegeben wird.

Wärmetransformatoren bzw. Wärmepumpen werden für die Nutzung von Abwärme mäßiger Temperatur, für Wärmepumpen oder für die Kälteerzeugung eingesetzt. Bei ihnen wird die Absorption von Gasen in Flüssigkeiten und deren anschließende Verdampfung ausgenutzt.

Die bekannten Vorrichtungen zur Durchführung von Sorptionswärmevorgängen haben den Nachteil, daß sie große und kostenaufwendige Absorbervorrichtungen erfordern, meistens Fallfilmabsorber; dies führt zu hohen Anlagekosten bei gleichzeitig großem Raumbedarf.

Es ist ferner vorgeschlagen worden, Füllkörperkolonnen oder Sprühdüsen für die Absorption von Gasen in Flüssigkeiten zu verwenden. Die Ausbeute derartiger Füllkörperkolonnen und Sprühdüsen ist jedoch vergleichsweise schlecht.

Weiterhin ist versucht worden, die Absorptionsrate von schlecht in Flüssigkeiten löslichen Gasen dadurch zu erhöhen, daß man in der absorbierenden Flüssigkeit einen Stoff löst, der mit dem absorbierten Gas chemisch reagiert.

Verfahren dieser Art sind jedoch schwierig durchzuführen, teuer und nur von begrenztem Nutzen. Dies ist insbesondere dann von Bedeutung, wenn nur wenig Volumen für die Durchführung der Absorption zur Verfügung steht, wie dies häufig bei Sorptionswärmetransformatoren oder Sorptionswärmepumpen der Fall ist.

Aus der DE—A—24 27 693 ist eine Vorrichtung zum innigen Vermischen eines Gases mit einer Flüssigkeit bekannt, bei der mehrere Gaszuführungsrohre paarweise gegeneinander und radial zentrisch in eine Mischkammer hinein gerichtet sind. Die Verwendung dieser Vorrichtung zur Durchführung von Sorptionswärmevorgängen ist bislang nicht in betracht gezogen worden.

Der Erfindung liegt die Aufgabe zu Grunde, ein Verfahren und eine Vorrichtung zur Durchführung von Sorptionswärmeprozessen anzugeben, die bei geringem Raumbedarf und Kostenaufwand mit hoher Effizienz arbeiten. Insbesondere sollen das erfindungsgemäße Verfahren und die erfindungsgemäße Vorrichtung höhere Absorptionsraten als die derzeit bekannten Verfahren und Vorrichtungen zur Durchführung von Sorptionswärmeprozessen erreichen.

Eine erfindungsgemäße Lösung dieser Aufgabe ist mit ihren Weiterbildungen in den Patentansprüchen angegeben.

Bei Sorptionswärmeprozessen wird eine an mindestens einer Komponente arme Lösung einem Absorber zugeführt. Diesem wird gleichzeitig der zu absorbierende Dampf zugeführt, so daß teilweise bereits im Absorber Dampf absorbiert wird. Hierzu werden erfindungsgemäß sowohl die gasförmige als auch die flüssige Phase werden in zwei Teilströme aufgeteilt und jeweils ein Teilstrom der flüssigen und der gasförmigen Phase werden wenigstens teilweise miteinander vermischt. Die gemischten zweiphasigen Teilströme werden derart aufeinander gerichtet, daß sie in einer zu dem Bereich, in dem die wenigstens teilweise Mischung der Teilströme stattfindet, symmetrischen Ebene aufeinander prallen. Hierdurch mischen sich das Gas und die Flüssigkeit eines jeden Stromes besonders gut miteinander. Die entstehende Wärme wird über einen Wärmetauscher abgeführt, der in den Absorber integriert oder an diesen angekoppelt ist.

Es hat sich überraschender Weise herausgestellt, daß diese Vorgehensweise bei der Absorption eines Gases in einer Flüssigkeit und damit bei der Durchführung von Sorptionswärmeprozessen besonders wirksam ist.

Das erfindungsgemäße SorptionsVerfahren kann dazu Verwendet werden, "Abfallwärme" von einem niedrigen Temperaturniveau auf ein höheres Temperaturniveau zu transformieren (Anspruch 6).

In jedem Falle ist es besonders vorteilhaft, einen Absorber zu verwenden, der aus zwei Misch- und Sprüheinrichtungen zur Erzeugung der zweiphasigen Gas/Flüssigkeitsströme besteht, die aufeinander prallen (Anspruch 7). Weiterhin ist es besonders vorteilhaft, wenn die Misch- und Sprüheinrichtung so ausgelegt sind, daß die Mischung bereits weitgehend in einer inneren Kammer erfolgt ist, bevor die Ströme die Vorrichtung verlassen.

Das erfindungsgemäße Verfahren kann auch dazu dienen, Wärme auf einem mittleren Temperaturniveau zu halten, indem man Wärme aus einer Quelle höherer und aus einer solchen tieferer Temperatur zuführt. Zu diesem Zweck ist es vorteilhaft, einen Absorber zu verwenden, der aus zwei Misch- und Sprüheinrichtungen zur Erzeugung der Zweiphasen-Strahlen besteht, bei dem Gas und Flüssigkeit außerhalb der einzelnen Düsen gemischt werden.

Der Gasstrom kann dabei aus einem oder mehreren verschiedenen Stoffen bestehen von denen einer oder mehrere vorzugsweise in die Flüssigkeit übergehen sollen; umgekehrt kann die Flüssigkeit aus einem oder mehreren Stoffen bestehen und zusätzlich gelöste oder suspendierte Feststoffe enthalten. Das erfindungsgemäße verfahren kann darüberhinaus für Prozesse mit überkritischer Fluidextraktion verwendet werden, bei denen ein überkritisches Gas in ein Flüssigkeitsgemisch injiziert wird.

Zur Erzeugung der Gas/Flüssigkeit-Zweiphasenströme kann man Verschiedene Einrichtungen bzw. Sprüheinrichtungen verwenden. Durch deren Ausbildung sollten sich Gas und Flüssigkeit zumindest bis zu einem gewissen Grad miteinander mischen, bevor die Strahlen aufeinander prallen.

Zu diesem Zweck können Gas und Flüssigkeit gemischt werden, bevor der Zweiphasenstrom die Sprüheinrichtung verläßt. Die Mischung erfolgt jedoch vorzugsweise im Bereich zwischen den Austrittsöffnungen der Sprüheinrichtung und der Aufprallebene der beiden Strahlen. Die Anordnung des Mischungsgebietes wird im wesentlichen durch konstruktive Überlegungen bestimmt und kann sich von System zu System ändern; hierbei sind Parameter wie die Löslichkeit des betreffenden Gases in der verwendeten Flüssigkeit, die erforderliche Rate der Gasabsorption, der zulässige Druckabfall, der vorhandene Platz etc. zu berücksichtigen.

Wie bereits ausgeführt, ist es besonders vorteilhaft, wenn die Mischung von Gas und Flüssigkeit in dem jeweiligen Zweiphasenstrom außerhalb der Sprüheinrichtung erfolgt.

Bei einer bevorzugten Ausführungsform der erfindungsgemäßen Vorrichtung weist die Sprüheinrichtung eine zentrale Öffnung auf, durch die die Flüssigkeit versprüht wird (Anspruch 9). Die zentrale Öffnung ist von einer ringförmigen Öffnung umgeben, durch die das Gas strömt. Die ringförmige Öffnung hat dabei bevorzugt eine Spaltweite zwischen 0,4 mm und 4 mm. Die ringförmige Öffnung ist bevorzugt unter einem Winkel zwischen 0° und 45° zur Strömungsachse der zentralen Öffnung angeordnet, so daß sich der Flüssigkeitsstrom und der Gasstrom in einer durch diesen Winkel bestimmten Entfernung vor der Sprüheinrichtung miteinander mischen.

Es hat sich herausgestellt, daß Spaltweiten zwischen 1 mm und 3 mm sowie Winkel zwischen 3° und 15° besonders Vorteilhaft sind (Ansprüche 10 und 11).

Bei einer Ausführungsform der Erfindung weist die Misch- und Sprüheinrichtung einen Kern, der die zentrale Öffnung für die Flüssigkeitsströmung enthält sowie einen äußeren Teil auf, der den Kern umgibt. Beide Teile bilden zusammen eine Kammer mit einer ringspaltförmigen Austrittsöffnung, durch die das Gas zugeführt bzw. der Gasstrom erzeugt werden. Dabei ist es möglich, die Breite des Ringspalts durch Verschieben des inneren Teils relativ zum äußeren Teil zu variieren (Anspruch 12).

Die Vorrichtung zur Ausführung des erfindungsgemäßen Verfahrens weist zwei Misch- und Sprüheinrichtungen für zweiphasige Gas/Flüssigkeitsströme auf, die so angeordnet sind, daß die beiden Gas/Flüssigkeitsströme aufeinander zuströmen und in der Symmetrieebene zwischen den beiden Misch- und Sprüheinrichtungen aufeinander prallen. Ferner weist die Vorrichtung Einrichtungen zur Zufuhr des Gases und der Flüssigkeit zur Misch- und Sprüheinrichtung sowie zum entnehmen des Gases und der Flüssigkeit aus der Prallzone auf. Es kann auch eine rohrförmige Kammer um die Strahlen und die Prallzone vorgesehen werden, die den Gas- und Flüssigkeitsstrom umfaßt und mit Einrichtungen für die Entfernung von Gas und Flüssigkeit ausgerüstet ist.

Hierdurch ist es möglich, eine bestimmte Stoffaustauschrate in einem kleinen Volumen zu verwirklichen. Die hierzu erforderliche Vorrichtung ist einfach aufgebaut, kostengünstig ausgeführt und leicht zu betreiben.

Die Erfindung wird nachstehend anhand von Ausführungsbeispielen unter Bezugnahme auf die Zeichnung näher beschrieben, in der zeigen:

Fig. 1 schematisch eine erfindungsgemäße Vorrichtung,

Fig. 2 ein Ausführungsbeispiel einer erfindungsgemäßen Misch- und Sprüheinrichtung

Fig. 3 schematisch zwei verschiedene Anordnungen für die Absorption eines Gases in einer Flüssigkeit, wie sie in den Beispielen beschrieben wird

Fig. 4 zusammenfassend Ergebnisse über die Absorption von $CO_2$ in Wasse

Fig. 5 schematisch einen Sorptionsprozess, mit dem Wärme von einer niedrigen auf eine höhere Temperatur transformiert wird, und

Fig. 6 schematisch einen Sorptionsprozess, der Wärme bei mittlerer Temperatur liefert, indem Wärme von einer Quelle hoher und einer solchen tieferer Temperatur umgewandelt wird.

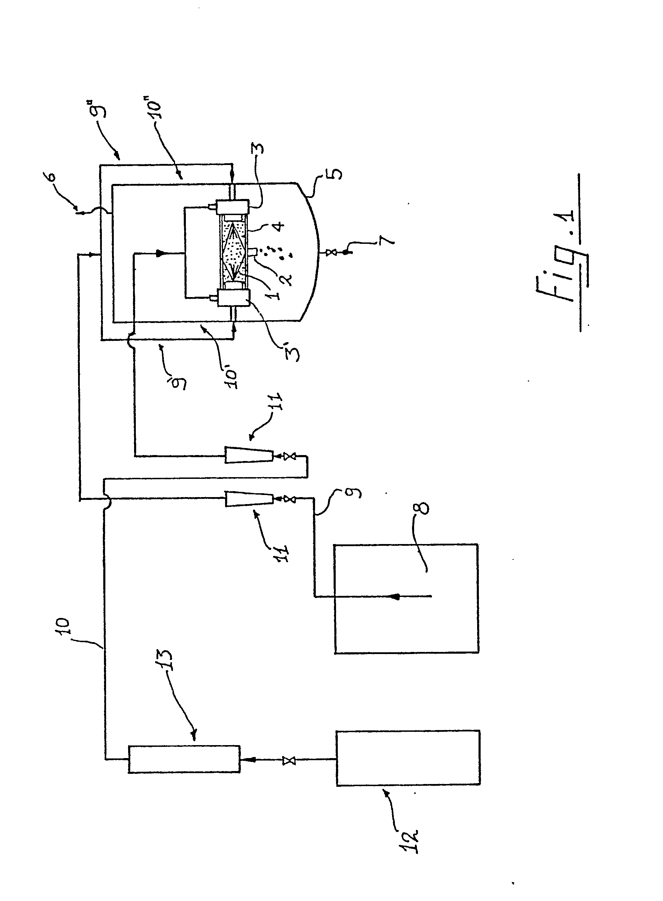

Fig. 1 zeigt eine erfindungsgemäße Vorrichtung zur Durchführung des erfindungsgemäßen Verfahrens. Die Vorrichtung weist ein aktives Volumen 1, in dem die beiden zweiphasigen Gas/Flüssigkeitsgemische strömen und aufeinander prallen, und eine Austrittsöffnung 2 für das Abführen von Gas und Flüssigkeit auf. Zwei Misch- und Sprüheinrichtungen 3 und 3' befinden sich in einer Kammer 4, die das aktive Volumen 1 umschließt. Diese Einrichtungen können zur einfachen Trennung des abströmenden Gas/Flüssigkeitsgemisches von einem äußeren Behälter 5 umschlossen sein, der einen Gasauslaß 6 und einen Flüssigkeitsauslaß 7 besitzt. Die Flüssigkeit wird dem System unter dem erforderlichen Druck aus einem Vorratsbehälter 8 durch eine Rohrleitung 9 zugeführt, während das Gas durch eine Rohrleitung 10 zugeführt wird. Weitere Armaturen 11 und Meßvorrichtungen, wie beispielsweise ein Gas/Flüssigkeitsseparator 12 oder ein Tropfenseparator 13 können — sofern erforderlich — zusätzlich vorgesehen werden.

Die Rohrleitungen 9 und 10 teilen sich in Leitungen 9' und 9" bzw. 10' und 10"; jede dieser Leitungen führt in eine separate Misch- und Sprüheinrichtung.

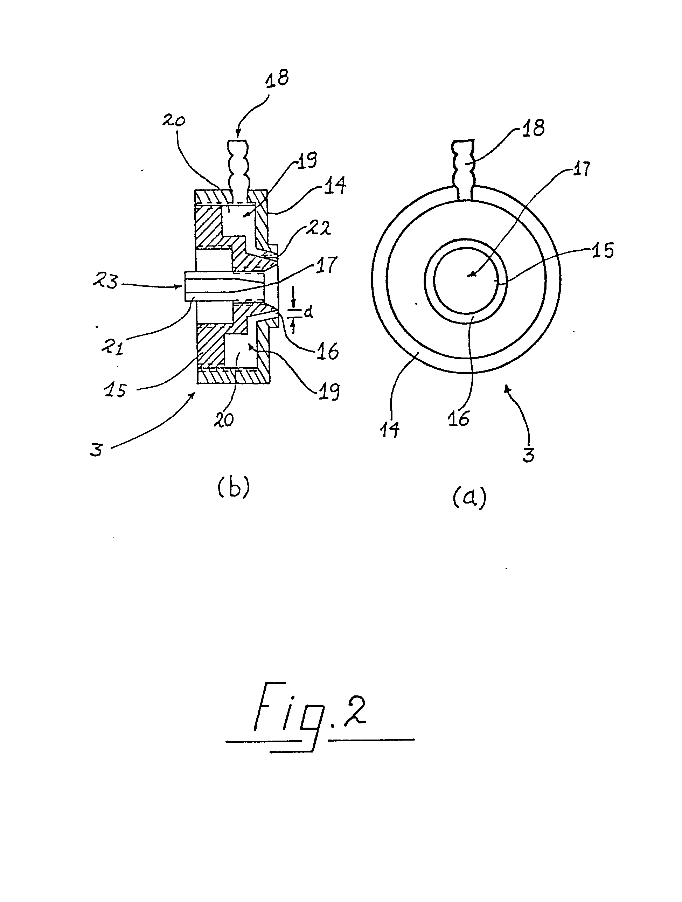

Fig. 2 zeigt ein bevorzugtes Ausführungsbeispiel der in Fig. 1 pauschal mit 3 bezeichneten Misch- und Sprüheinrichtung. Fig. 2(a) zeigt eine Vorderansicht der Einrichtung. Die Einrichtung besteht allgemein aus einem äußeren Teil 14 und einem inneren Teil 15. Das Gas durchströmt die ringförmige Öffnung 16, während die Flüssigkeit durch eine nicht in Fig. 2 dargestellte Düse im Zentrum 17 des inneren Teils der Einrichtung strömt. Das Gas wird der Einrichtung durch das Einlaßrohr 18 zugeführt.

Fig. 2(b) zeigt die Einrichtung nach Fig. 2(a) im Querschnitt. Der innere und äußere Teil der Einrichtung sind voneinander trennbar und bilden zusammen den Ringraum 19, der eine innere Kammer 20 aufweist, der das Gas durch den Einlaß 18 zugeführt wird, sowie einen Auslaßringkanal mit der Öffnung 16, durch die das Gas ausströmt und sich mit der Flüssigkeit aus der Düse 17 mischt. Der Ringraum 19, die Abmessungen der Kammer 20 und die Spaltweite "d" des ringförmigen Auslasses 16 können verändert werden, indem man den inneren Teil 16 in seiner Lage beläßt und den äußeren Teil 14 nach außen oder innen bewegt. Der innere Teil 15 der Einrichtung kann mit einer zentral angebauten Sprühdüse 21 ausgestattet werden oder kann vorzugsweise mit Halterungen für eine auswechselbare Düse versehen werden, wie in der Figur gezeigt ist.

Der Sprühwinkel des ringförmigen Gasauslasses ist definiert als Winkel zwischen der Wand 22 des ringförmigen Auslasses 16 und der Achse der Sprühdüse 21. Die Flüssigkeit wird der genannten Sprühdüse 21 über ihren Einlaß 23 zugeführt.

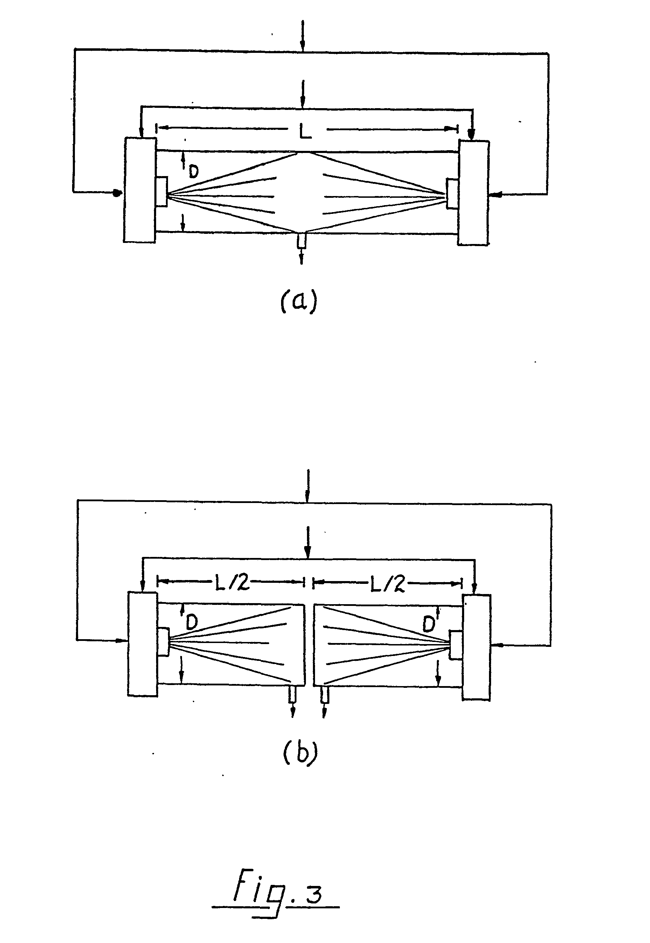

Im folgenden soll das erfindungsgemäße Verfahren unter Bezugnahme auf die Fig. 3 bis 6 erläutert werden:

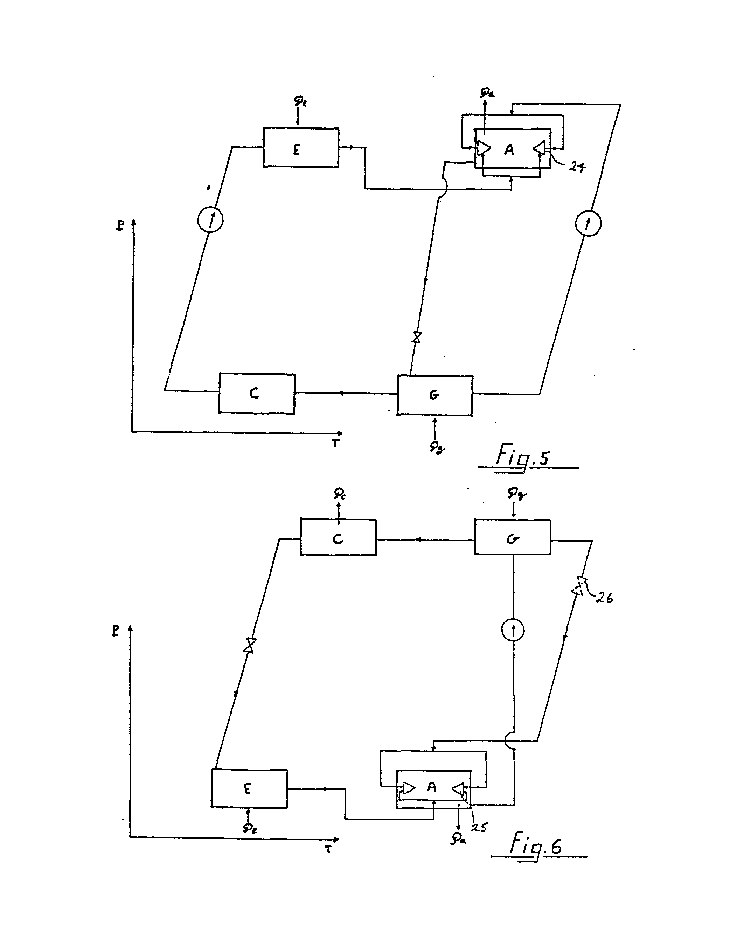

In den Fig. 5 und 6 sind die Bestandteile erfindungsgemäß ausgebildeter Vorrichtungen in einem P/T-(Druck/Temperatur)-Koordinatensystem an den Stellen ihrer Arbeitspunkte eingezeichnet.

Nur zum Zwecke der Erläuterung und ohne Beschränkung der Allgemeinheit soll angenommen werden, daß die Arbeitsstoffe Ammoniak und Wasser sind.

Die Vorrichtungen gemäß den Fig. 5 und 6 weisen einen Verdampfer E, einen Kondensator C, einen Austreiber G und einen Absorber A auf, die in der dargestellten Weise miteinander verbunden sind.

Der Absorber A weist eine erfindungsgemäß ausgebildete Misch- und Sprüheinrichtung auf, wie sie beispielsweise in Fig. 2 näher dargestellt ist; diese Einrichtung wird im folgenden auch als doppelter Prallstrahlabsorber bezeichnet. Der Absorber A enthält Misch- und Sprühdüsen 24, in denen die Mischung stattfindet, bevor die Ströme die Einrichtung verlassen.

Der Austreiber G enthält eine Lösung von Ammoniak in Wasser. Eine Wärmemenge $Q_g$ wird dem Austreiber bei mäßiger Temperatur zugeführt, wodurch vorzugsweise Ammoniak aus der Ammoniak-Wasser-Lösung verdampft.

Der Ammoniak-Dampf strömt in den Kondensator C, wo er unter Abgabe von Abfallwärme kondensiert, während die im Austreiber zurückbleibende (an Ammoniak) arme Lösung in den Absorber A gepumpt wird. Flüssiges Ammoniak wird aus dem Kondensator C in den Verdampfer E gepumpt, wo eine Wärmemenge $Q_e$ ebenfalls bei mäßiger Temperatur zugeführt wird. Ammoniak wird bei nun höherem Druck verdampft. Der Ammoniakdampf aus dem Verdampfer E und die arme Lösung aus dem Austreiber G werden dem Absorber A zugeführt, in dem der Ammoniakdampf von der armen Lösung unter Abgabe einer Nutzwärme $Q_a$ bei höherer Temperatur absorbiert wird, die aus dem Absorber abgeführt wird. Die (an Ammoniak) reiche Lösung wird dann wieder über ein Drösselventil dem Austreiber zugeführt.

Durch die Verwendung einer erfindungsgemäßen Vorrichtung, die nach dem Zweistrahlverfahren arbeitet, für die Absorption wird der Wirkungsgrad des Prozesses erhöht und das Bauvolumen verringert.

Die in Fig. 6 dargestellte Vorrichtung arbeitet im wesentlichen in gleicher Weise wie die in Fig. 5 dargestellte:

Aus der reichen Ammoniaklösung wird im Austreiber G durch Zufuhr der Wärmemenge $Q_g$ bei höherer Temperatur vorzugsweise Ammoniakdampf ausgetrieben. Dieser wird im Kodensator C unter Abgabe einer Wärmemenge $Q_c$ kondensiert. Kondensierter Ammoniak wird dann dem Verdampfer E über ein Drosselventil zugeführt. Durch Zufuhr der Wärmemenge $Q_e$ aus einer Wärmequelle niederer Temperatur wird Ammoniak im Verdampfer E verdampft und dann dem Absorber A zugeführt, in den auch die arme Lösung aus dem Austreiber G strömt.

Der Absorber A verwendet wieder den erfindungsgemäß vorgesehenen doppelten Prallstrahl. Er besteht aus zwei Misch- und Sprüheinrichtungen 25 zur Erzeugung von zwei Zweiphasen-Prallstrahlen und ist so ausgebildet, daß die Mischung des Gases und der Flüssigkeit außerhalb der Sprüheinrichtung stattfindet.

Die Nutzwärme $Q_a$ erhält man bei mittlerer Temperatur durch Absorption des Ammoniakdampfes in der armen Lösung. Diese Wärme wird aus dem Absorber A abgeführt. Die zurückbleibende reiche Lösung wird dann in den Austreiber G gepumpt, in dem ein höherer Druck herrscht.

Im Gegensatz zu bekannten Verfahren, bei denen ein Drosselventil 26 (gestrichelt in der Figur eingezeichnet) erforderlich ist, um die arme Lösung vom hohen Druck des Austreibers G auf den niedrigeren Druck des Absorbers A zu drosseln, ist nach der erfindungsgemäßen Anordnung kein Drosselventil erforderlich. Vielmehr wird der Druck der armen Lösung ausgenutzt zur Sprühstrahlerzeugung in der Sprüheinrichtung. Wie zuvor erläutert, werden das Gas und die Flüssigkeit nach der bevorzugten Anordnung der Erfindung außerhalb der Sprüheinrichtung gemischt, wodurch man dem Asorber eine Flüssigkeit bei einem Druck zuführen kann, der größer ist als der des absorbierenden Dampfes.

Die folgenden nicht einschränkenden Beispiele sollen die Wirksamkeit das erfindungsgemäßen Verfahrens verdeutlichen.

Beispiele 1 bis 8

Der Vorrichtung gemäß Fig. 1 wird zur Absorption von $CO_2$ in Wasser verwendet, wobei die Einrichtung gemäß Fig. 2 für beide Ströme mit zwei Festkegeldüsen (Spraying Systems Co., Fulljet) mit 1,2 mm Austrittsdurchmesser eingesetzt wird. Der Sprühwinkel des Gases betrug 5° und die Spaltweite d des ringförmigen Auslasses 1,5 mm.

Die Absorptionszeile besteht aus Glas und ist — wie in Fig. 3 (a) gezeigt — an beiden Enden eingespannt. Es werden Zeilen verschiedenen Abmessungen (Durchmesser D und Länge L) verwendet. Wasser aus dem Vorratsbehälter 8, Fig. 1, wird der Sprühdüse zugeführt. Das $CO_2$ strömt bei einem Druck von rund 2 bar aus einem Wasser-Sättiger 12 und einem Tropfenseperator 13. Die Gas- und Flüssigkeitsströme werden in zwei Hälften getrennt und dann den Misch- und Sprüheinrichtungen zugeführt. Die Temperaturen bzw. Drücke in der Absorptionszelle können zwischen 20°C und 26°C bzw. 960 und 974 hPa variiert werden. Die Absorptionsrate von $CO_2$ ergibt sich aus dem Mengenstrom des Wassers und der 2 Konzentration von $CO_2$ im austretenden Gas-Flüssigkeitsstrom.

Zu jeder Versuchsreihe sind vergleichende Experimente mit der Anordnung gemäß Fig. 3 (b) unter identischen Bedingungen mit einzelnen Fluidströmen in zwei getrennten Absorptionszeilen, von denen jede halb so lang ist wie die Absorptionszeile gemäß Fig. 3(a), so daß das gesamte Volumen und alle anderen parameter für die Absorption in beiden Anordnungen gleich waren.

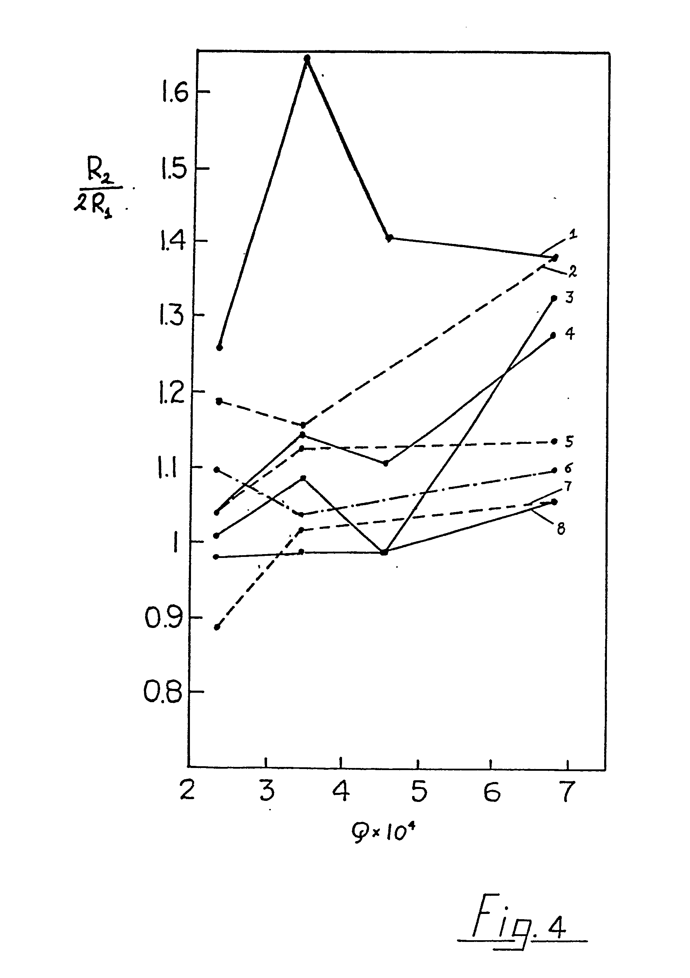

Die Ergebnisse dieser Versuche (umgerechnet auf Standardbedingungen 1000 hPa und 25 C) zeigt Fig. 4. Dort ist das Verhältnis $R_2/2R_1$ der gesamten Absorptionsrate $R_2$ von $CO_2$ gemäß der Anordnung nach Fig. 3 (a) bezogen auf die Absorptionsrate $2R_1$ gemäß Fig. 3 (b) ($R_1$ ist die Absorptionsrate des $CO_2$ in einer einzelnen Vorrichtung nach Fig. 3 (b)) aufgetragen über der Durchflußmenge des $CO_2$ in m³/s.

Die Versuchsbedingungen sind in Tabelle 1 zusammengefaßt, die den Mengenstrom W des Wassers (in kg/s) und die Zellenabmessungen $D \times L$ (in cm) enthält.

Tabelle 1

| Versuchsnr. | W | $D \times L$ |
|---|---|---|
| 1 | 0.0187 | 0.043 × 0.08 |
| 2 | 0.0157 | 0.043 × 0.1 |
| 3 | 0.0187 | 0.06 × 0.1 |
| 4 | 0.0187 | 0.043 × 0.1 |
| 5 | 0.0157 | 0.03 × 0.1 |
| 6 | 0.0247 | 0.1 × 0.1 |
| 7 | 0.0157 | 0.06 × 0.1 |
| 8 | 0.0187 | 0.1 × 0.1 |

**Beispiele 9 bis 13**

Es wurden Absorptionsversuche mit Azeton und Wasser ausgeführt mit den gleichen Anordnungen wie in den Beispielen 1 bis 8. Die Absorptionszelle war 150 mm lang und hatte einen Durchmesser von 43 mm. Druck bzw. Temperatur in der Absorptionszelle betrugen 960 hPa bzw. 25°C und der Mengenstrom des Azeton war $5.17 \times 10^{-4}$ m³/s. Die Ergebnisse sind in Tabelle 2 wiedergegeben.

Tabelle 2

| Versuchsnr. | W | $R_2/2R_1$ |
|---|---|---|
| 1 | 0.0127 | 1.08 |
| 2 | 0.0155 | 1.27 |
| 3 | 0.0250 | 1.28 |
| 4 | 0.0217 | 1.30 |
| 5 | 0.0250 | 1.12 |

Die vorstehenden Beispiele und Beschreibungen dienen nur der Verdeutlichung der Erfindung und sind nicht als Einschränkung anzusehen.

**Patentansprüche**

1. Verfahren zur Durchführung von Sorptionswärmevorgängen, bei dem eine gasförmige Phase in einer an der zu absorbierenden Phase armen flüssigen Phase absorbiert und die entstehende Wärme über einen Wärmetauscher abgegeben wird, gekennzeichnet durch folgende Schritte:

sowohl die gasförmige als auch die flüssige Phase werden in zwei Teilströme aufgeteilt,

jeweils ein Teilstrom der flüssigen und der gasförmigen Phase werden wenigstens teilweise miteinander vermischt,

die gemischten zweiphasigen Teilströme werden derart aufeinander gerichtet, daß sie in einer zu dem Bereich, in dem die wenigstens teilweise Mischung der Teilströme stattfindet, symmetrischen Ebene aufeinander prallen.

2. Verfahren nach Anspruch 1, dadurch gekennzeichnet, daß die gasförmige Phase aus zwei oder mehr verschiedenen gasförmigen Stoffen besteht, von denen einer oder mehrere in dem Flüssigkeitsstrom absorbiert werden.

3. Verfahren nach Anspruch 1 oder 2, dadurch gekennzeichnet, daß die flüssige Phase aus einem oder mehreren verschiedenen flüssigen Stoffen besteht.

4. Verfahren nach einem der Ansprüche 1 bis 3, dadurch gekennzeichnet, daß ein Feststoff in der Flüssigkeit gelöst und/oder suspendiert wird.

5. Verfahren nach einem der Ansprüche 1 bis 4, dadurch gekennzeichnet, daß Wärme von einer mittleren Temperatur auf eine höhere Temperatur gehoben wird.

6. Verfahren nach einem der Ansprüche 1 bis 4, dadurch gekennzeichnet, daß Wärme bei mittlerer Temperatur von zwei Wärmequellen bereitgestellt wird, von denen die eine eine höhere und die andere eine tiefere Temperatur besitzt.

7. Vorrichtung zur Durchführung eines Sorptionswärme- Verfahrens gemäß einem der Ansprüche 1 bis 6, mit einer Einheit zum Kontaktieren einer gasförmigen und einer flüssigen Phase und mit einer Wärmeaustauschereinheit, dadurch gekennzeichnet, daß die Einheit zum Kontaktieren der beiden Phasen zwei Einrichtungen für das Mischen der beiden Phasen und Versprühen des zweiphasigen Gas-/Flüssigkeitsstromes aufweist, die so angeordnet sind, daß die beiden Gas-/Flüssigkeitsströme aufeinander gerichtet sind und in einer Ebene symmetrisch zu den beiden Sprüheinrichtungen aufeinander prallen, und daß Einrichtungen für die Gas- und Flüssigkeitszufuhr zur Misch- und Sprüheinrichtung und für die Abfuhr aus der Prallzone Vorgesehen sind.

8. Vorrichtung nach Anspruch 7, dadurch gekennzeichnet, daß beide Strahlen in einer rohrförmigen Kammer aufeinander prallen, deren Durchmesser mindestens gleich dem Durchmesser der Strahlen in der Aufprallebene ist und die eine Auslaßöffnung für die gasförmige Phase und die flüssige Phase besitzt.

9. Vorrichtung nach Anspruch 7 oder 8, dadurch gekennnzeichnet, daß die Misch- und Versprüheinrichtung eine zentrale Bohrung, durch die die Flüssigkeit versprüht wird, und eine die zentrale Bohrung umgebende ringförmige Öffnung aufweist, durch die ein Gas strömt, und daß die Spaltweite der Öffnung zwischen 0,5 und 4 mm beträgt, und die Strömungsrichtung des Gases durch die ringförmige Öffnung einen Winkel zwischen 0° und 45° mit der Strömungsachse der Flüssigkeit durch die zentrale Bohrung einschließt, so daß sich der Flüssigkeits- und der Gasstrom sich in einer durch diesen Winkel bestimmten Entfernung von der Vorrichtung mischen.

10. Vorrichtung nach Anspruch 9, dadurch gekennzeichnet, daß die Spaltbreite des Ringspaltes zwischen 1 und 3 mm liegt.

11. Vorrichtung nach Anspruch 9 oder 10, dadurch gekennzeichnet, daß der Strömungswinkel des Gases zwischen 3° und 15° liegt.

12. Vorrichtung nach einem der Ansprüche 9 bis 11, dadurch gekennzeichnet, daß sie ein Kernstück, das die zentrale Bohrung für die Strömung der Flüssigkeit enthält, und einem äußeren Teil aufweist, der auf das Kernstück derart montierbar ist, daß durch den äußeren Teil und das Kernstück eine innere Kammer entsteht, der Gas zuführbar ist, und die die ringförmige Auslaßöffnung für das Gas enthält, deren Spaltweite dadurch variiert werden kann, daß man das Kernstück und den äußeren Teil gegeneinander verschiebt.

## Revendications

1. Procédé de réaliser des processus thermiques à sorption, dans lequel une phase gazeuse est absorbée à une phase liquide à faible teneur en la phase à absorber, en enlevant la chaleur produite par un échangeur thermique, caractérisé par les opérations suivantes:

la phase gazeuse aussi bien que la phase liquide sont divisée dans deux courants partiels,

un courant partiel de la phase liquide est mélangé à un courant partiel de la phase gazeuse au moins en partie,

les courants partiels biphasiques mélangés sont si orientés l'un vers l'autre qu'ils s'heurtent dans un plan symétrique à la zone dans laquelle se fait le mélange au moins en partie desdits courants partiels.

2. Procédé selon la Revendication 1, caractérisé en ce que la phase gazeuse comprend au moins deux substances gazeuses dont au moins une est absorbée dans ledit courant de liquide.

3. Procédé selon la Revendication 1 ou 2, caractérisé en ce la phase liquide consiste en une ou plusieurs substances liquides différentes.

4. Procédé selon quelconque des Revendications 1 à 3, caractérisé en ce qu'une matière solide est dissoute et/ou suspendue dans le liquide.

5. Procédé selon quelconque des Revendications 1 à 4, caractérisé en ce que la chaleur est porté d'un niveau moyen à une température élevée.

6. Procédé selon quelconque des Revendications 1 à 4, caractérisé en ce qu'on rend de la chaleur disponible à une température moyenne qui provient de deux sources thermiques dont une présente une chaleur élevée et l'autre une température plus basse.

7. Dispositif à réaliser un processus thermique à sorption selon quelconque des Revendications 1 à 6, comprenant une unité à contacter une phase gazeuse avec une phase liquide, ainsi qu'une unité échangeur thermique, caractérisé en ce ladite unité à contacter les deux phases comprend deux moyens à mélanger lesdites deux phases et à pulvériser le courant de gaz/liquide biphasique. lesdits moyens étant si disposés que les deux courants de gaz/liquide sont orientés l'un vers l'autre et s'heurtent l'un contre l'autre dans un plan symétrique relativement auxdits deux moyens atomiseurs, et en ce que des moyens sont pourvus pour l'amenée du gaz et du liquide aux moyens mélangeurs et atomiseurs ainsi que pour l'enlèvement de la zone d'heurtage.

8. Dispositif selon la Revendication 7, caractérisé en ce les deux jets s'heurtent l'un contre l'autre dans une chambre tubulaire dont le diamètre correspond au moins au diamètre des jets dans la zone d'heurtage, pendant que ladite chambre comprend un orifice de sortie pour la phase gazeuse et pour la phase liquide.

9. Dispositif selon la Revendication 7 ou 8, caractérisé en ce que les moyens mélangeurs et atomiseurs comprennent un perçage central par lequel le liquide s'atomise, et un orifice annulaire entourant ledit perçage central, par lequel un gaz s'écoule, et en ce que ledit orifice présente une largeur de passage de 0.5 à 4 mm, et en ce que le sens d'écoulement du gaz par ledit orifice annulaire et l'axe d'écoulement du liquide par ledit perçage central inclurent un angle entre 0° et 45° d'une manière que le courant de liquide se mélange au courant de gaz à une distance du dispositif qui est définie par cet angle.

10. Dispositif selon la Revendication 9, caractérisé en ce que la largeur de passage du passage annulaire se monte à une valeur entre 1 et 3 mm.

11. Dispositif selon la Revendication 9 ou 10, caractérisé en ce l'angle de courant du gaz se monte à une valeur entre 3° et 15°.

12. Dispositif selon quelconque des Revendications 9 à 11, caractérisé en ce qu'il comprend une partie centrale dans laquelle est pourvu ledit perçage central pour l'écoulement du liquide, et une partie extérieur à monter sur ladite partie centrale d'une façon que ladite partie extérieure et la partie centrale coopèrent à former une chambre intérieure à laquelle le gaz est amenable et qui est pourvu dudit orifice annulaire de sortie pour le gaz, dont la largeur de passage se peut varier par déplacement de ladite partie centrale relativement à ladite partie extérieure.

**Claims**

1. Method for carrying through sorption heat processes, wherein a gaseous phase is absorbed in a liquid phase poor in the phase to be absorbed and the resulting heat is emitted through a heat exchanger, characterized by the following steps:
both the gaseous and the liquid phases are split into two partial flows,
one partial flow of the liquid phase and one partial flow of the gaseous phase are intermixed at least in part,
the mixed biphase partial flows are directed in opposition to each other in a way that they collide with each other in a plane symmetrical with respect to the zone in which the at least partial mixing of the partial flows takes place.

2. Method according to Claim 1, characterized in that the gaseous phase consists of two or more different gaseous substances whereof one or more is or are absorbed in said liquid flow.

3. Method according to Claim 1 or 2, characterized in that the liquid phase consists of one or more different liquid substances.

4. Method according to any of Claims 1 to 3, characterized in that a solid is dissolved and/or suspended in said liquid.

5. Method according to any of Claims 1 to 4, characterized in that heat is raised from a mean to an elevated temperature level.

6. Method according to any of Claims 1 to 4, characterized in that heat at mean temperature is provided by two thermal sources whereof one is set at a higher and the other one to a lower temperature level.

7. Device for carrying through a sorption heat process according to any of Claims 1 to 6, comprising a unit for contacting a gaseous phase and a liquid phase as well as a heat exchanger unit, characterized in that said unit for contacting the two phases comprises two means for mixing said two phases and for spraying the biphase gas/liquid flow, which means are so disposed that the two gas/liquid flows are oriented in opposition to each other and collide with each other in a plane symmetrical with respect to the two spraying means, and that means are provided for gas and liquid supply to the mixing and spraying means as well as for the removal from the collision zone.

8. Device according to Claim 7, characterized in that both jets collide with each other in a tubular chamber whose diameter corresponds at least to the diameter of the jets in said collision plane, and which comprises a discharge opening for the outlet of the gaseous phase and the liquid phase.

9. Device according to Claim 7 or 8, characterized in that said mixing and spraying means comprises a central bore through which the liquid is sprayed and an annular opening surrounding said central bore, through which a gas passes, and in that the annulus width of the opening is in the range from 0.5 to 4 mm, and that the direction of gas flow through said annular opening defines an angle in the range from 0° to 45° relative to the axis of liquid flow through said central bore such that the liquid flow will mix with said gas flow at a distance from the device, which is defined by this angle.

10. Device according to Claim 9, characterized in that the gap width of said annulus is in the range from 1 to 3 mm.

11. Device according to Claim 9 or 10, characterized in that the angle of gas flow is in the range from 3° to 15°.

12. Device according to any of Claims 9 to 11, characterized in that it comprises a core element containing the central bore for the liquid flow, and an outer element suited for being mounted on said core such that an inner chamber is formed by said outer element and said core, which chamber may be supplied with gas and which contains said annular gas discharge opening whose annulus width may be varied by relative displacement of said core and said outer element.

EP 0 179 478 B1

Fig. 1

1

(b)        (a)

# Fig.2

(a)

(b)

Fig.3

$$\frac{R_2}{2R_1}$$

$\mathcal{Q} \times 10^4$

*Fig.*4

_Fig.5_

_Fig.6_